(19) Europäisches Patentamt
European Patent Office
Office européen des brevets

(11) Publication number: **0 480 384 A2**

(12) **EUROPEAN PATENT APPLICATION**

(21) Application number: **91117158.5**

(51) Int. Cl.5: **C08L 71/12**, C08K 5/09

(22) Date of filing: **08.10.91**

(30) Priority: **10.10.90 IT 2169890**

(43) Date of publication of application: **15.04.92 Bulletin 92/16**

(84) Designated Contracting States: **AT BE CH DE DK ES FR GB GR IT LI LU NL SE**

(71) Applicant: **ECP ENICHEM POLIMERI S.r.l.**
**16, Piazza della Repubblica**
**I-20124 Milano(IT)**

(72) Inventor: **Casarini, Andrea, Dr.**
**8, Via Marchesi**
**I-20067 Paullo, Milan(IT)**
Inventor: **Della Fortuna, Giorgio, Dr.**
**5, Via delle Ande**
**I-20151 Milan(IT)**
Inventor: **Zannotti, Giovanni**
**32, Via Archimede**
**I-20098 San Giuliano Milanese, Milan(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

# (54) Polyphenylene oxide compositions stabilized with alkynoic acids.

(57) Compositions based on at least one polyphenylene ether obtained by oxidative coupling of one or more substituted phenols, either alone or in combination with at least one (co)polymer of styrene, are thermally stabilized by adding thereto at least one compound of formula (I):

$$R\text{-}C{\equiv}C\text{-}COOH \quad (I)$$

where R has the meanings indicated in claim 1.

These compositions have an excellent thermal stability in the molten state, are thermally stable for extended periods of time and have a much better fluidity and processability than corresponding polymeric blends without compounds (I).

EP 0 480 384 A2

The present invention relates to polyphenylene oxide compositions which show improved fluidity in the molten state and thermal stability and are obtainable by adding at least one compound of general formula (I):

R-C≡C-COOH (I)

wherein R has the meanings given below to polyethylene ethers or polymeric blends or alloys thereof with at least one (co)polymer of styrene.

It is known that polyphenylene oxides, also known as polyphenylene ethers (PPE), obtained from the (co)polymerization (by oxidative coupling) of one or more substituted phenols, cannot be used easily as such because of their high viscosity in the molten state, the consequently high operating temperatures required and their high degree of thermo-oxidative sensitivity which causes colour changes (darkening), partial cross-linking and gelation of the polymer during the processing thereof.

The combination of PPE with one or more styrenic resins considerably reduces the operating temperature and results in compositions which can be processed more easily and show a mutual improvement in the intrinsic properties of the constituents. By varying the ratios of polyphenylene oxide to styrenic polymer and depending on the application requirements, shock resistant polyphenylene oxide with improved processability or styrene homo- and copolymers with improved heat and flame resistance, better impact strength and technological properties can be obtained.

It is also known, however, that not only PPE, but also its blends with styrenic homo- and copolymers, in spite of the above improvements, undergo changes in the molecular structure at the high transformation temperatures of the manufacturing processes.

With particular reference to polyphenylene oxide, thermal degradation processes occur, with a consequent decrease in the molecular dimensions. At the same time a combination of macromolecules can take place, caused by radicalic processes due to the oxygen in the air and triggered by the presence of catalytic residues. In the case of PPE obtained by the oxidative coupling of 2,6-dimethylphenol these combinations are caused by the methyl groups which are present in the polymeric chain as substituents of the benzene ring in positions 2 and 6.

The overall effect of this change is a general decrease, even if limited, of the number average molecular weight of the PPE and in some cases an increase in the weight average molecular weight thereof, with a consequent variation in the molecular weight distribution. When the cross-linking process is particularly vigorous, varying quantities of gel can be formed.

It is known that the effects of heat degradation can considerably be reduced by means of suitable stabilizers belonging to different classes of compounds and showing varying degrees of effectiveness, such as alkyl and aryl phosphites, sterically hindered phenols, thioethers of esters of aliphatic carboxylic acids, dithiocarbamates of heavy metals, 2-mercaptobenzimidazole, 2-mercaptobenzotriazole, 2,4-bis(n-octylthio)-6-(4-hydroxy-di-t-butyl-aniline)-1,3,5 triazine, hexamethylphosphoramide, etc.

On the other hand, the cross-linking reactions triggered by radicalic processes cannot be controlled by the above additives and generally require the use of chemical compounds having peculiar structures.

These compounds probably neutralize the radicalic systems present in a latent state in the polyphenylene oxide, their effects becoming manifest when the material is heated to high transformation temperatures.

Transformation technology requires the polymeric material to have sufficient thermal stability so as to ensure only slight variations in the molecular weight, guaranteeing an almost constant degree of fluidity. This is necessary in order to obtain manufactured articles with satisfactory technological properties at a high output rate.

The patent literature discloses several compounds which are effective additives for thermally stabilizing polyphenylene oxide and/or its blends with styrenic polymers, in the sense of maintaining the fluidity of the material in its molten state at a suitable level.

These compounds, for example, are aliphatic and cycloaliphatic conjugated dienic compounds, dienophilic ethylenic compounds and precursors thereof.

EP-A-121 974 mentions cyclopentadiene, N-alkyl or N-aryl substituted maleimide, acenaphthylene, indene, maleic anhydride and mixtures of maleic anhydride with primary amines.

The use of imides of maleic acid is claimed in EP-A-222 246, whereas EP-A-257 486 describes the use of alkyl and/or alkylaryl esters of maleic and fumaric acids as heat stabilizing agents.

The present invention is based on the surprising finding that certain unsaturated compounds which do not belong to the above-mentioned classes, are capable of endowing polyphenylene oxide and its blends with styrenic polymers with a long-lasting thermal stability in the molten state and at the same time ensure

a sufficient fluidity to allow improved processability thereof.

The above stabilizing additives according to the present invention are represented by general formula (I):

R-C≡C-COOH (I)

wherein R is $C_1$-$C_6$ or haloalkyl or alkyl, aryl, haloaryl, alkylaryl or cycloalkyl containing from 5 to 7 carbon atoms in the ring.

Specific examples of R are optionally halogenated (e.g. chlorinated or fluorinated) methyl, ethyl, propyl, isopropyl, butyl, phenyl, tolyl, xylyl, benzyl, phenethyl, cyclopentyl and cyclohexyl.

These stabilizers are particularly effective at a concentration of 0.05 to 10 parts by weight per 100 parts by weight of polyphenylene oxide or its blends with homo- and/or copolymers of styrene. The best results are obtained with quantities of stabilizer ranging from 0.1 to 4 parts by weight per 100 parts by weight of polyphenylene oxide or its blends.

These stabilizers can be added to the polyphenylene oxide or its blends with (co)polymers of styrene by using any of the techniques known for this purpose.

In any case, the addition of the stabilizing system of the present invention causes a decrease in the reactions which result in an increase of the molecular dimensions of the polyphenylene oxide, thus leading to a considerable improvement in the fluidity under the required operating and transformation conditions of the polyphenylene oxide and its blends.

Specific examples of chemical compounds of general formula (I) are 2-butynoic, 2-hexynoic, 2-heptynoic, 2-octynoic and 3-phenylpropynoic acids.

3-phenylpropynoic acid is particularly suitable for the purposes of the present invention.

Polyphenylene ethers (PPE) are compounds which have been known for a long time. They are described in numerous patents, and are generally obtained by means of oxidative coupling of one or more alkylphenols in the presence of a suitable catalyst, the most widely used alkylphenol being 2,6-dimethylphenol. They correspond to the general formula (II):

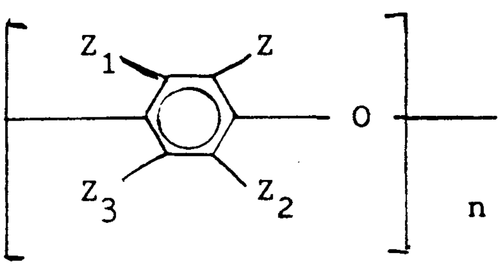

(II)

wherein Z, $Z_1$, $Z_2$ and $Z_3$ are independently selected from hydrogen , chlorine, bromine, fluorine, alkyl (e.g. $C_1$-$C_4$ alkyl) substituted alkyl, cycloalkyl (e.g. $C_5$-$C_8$ cycloalkyl), substituted cycloalkyl, phenyl and substituted phenyl, and n represents the total number of monomeric units and is an integer of at least (and preferably higher than) 50.

Non-limiting examples of PPEs which can be used for the production of the polymeric compositions of the present invention and articles made therefrom are

poly(2,6-dimethyl-1,4-phenylene ether);
poly(2,6-diethyl-1,4-phenylene ether);
poly(2-methyl-6-ethyl-1,4-phenylene ether);
poly(2-methyl-6-propyl-1,4-phenylene ether);
poly(2,6-dipropyl-1,4-phenylene ether);
poly(2,3,6-trimethyl-1,4-phenylene ether);
poly(2-chloro-1,4-phenylene ether);
poly(2-bromo-1,4-phenylene ether);
poly(2-phenyl-1,4-phenylene ether);
poly(2-chloro-6-bromo-1,4-phenylene ether); and
poly(2,6-dichloro-1,4-phenylene ether).

It is particularly preferable to use poly(2,6-dimethyl-1,4-phenylene ether) for which, in formula (II), $Z_1 = Z_3 = H$; and $Z = Z_2 = CH_3$.

The preferred poly(2,6-dimethyl-1,4-phenylene ether) has a weight average molecular weight $\overline{MW}$ of

from about 8,000 to about 80,000, particularly from about 15,000 to about 60,000, and an intrinsic viscosity, measured in chloroform at 25° C, of from 0.3 to 0.7 dl/g.

Equally suited for the purposes of the present invention are PPEs obtained by the oxidative coupling of two or more different phenols. Preferably, in these copolymers one of the two or more monomeric units is derived from 2,6-dimethylphenol and the preferred comonomer is 2,3,6-trimethylphenol.

As is widely known, the oxidative condensation of 2,6-xylenol is catalyzed by complexes of cupric salts with aliphatic amines; the present invention is independent of the catalytic system employed.

The methods of preparation of polyphenylene ethers suitable for the present invention are well known to experts in this field.

The (co)polymers of styrene (or styrene resins) used for the purposes of the present invention may be polymers, copolymers, interpolymers, random or block, linear or branched or graft, which contain styrenic units.

Examples of these resins are polystyrene (PS), high impact polystyrene (HIPS), polystyrene grafted onto any polymeric, plastic or thermoplastic substrate, ABS resins, SBR rubbers, linear or star-shaped copolymers based on polystyrene or grafted with polystyrene, various copolymers or interpolymers of styrene with different monomers, e.g., styrene-maleic anhydride, styrene-maleimide, styrene-(meth)acrylic acid, styrene-(meth)acrylate, acrylonitrile-styrene-acrylate, methacrylate-acrylonitrile-butadiene-styrene copolymers, etc.

The preparation of the above styrenic resins is also well known to experts in this field.

The polymeric compositions according to the present invention preferably contain from 1 to 99, particularly from 20 to 80 parts by weight of polyphenylene oxide per 100 parts by weight of composition and from 0.95 to 99% by weight of styrenic resin(s). In fact it is possible, depending on the intended use of the polymeric blend, to obtain compositions with good mechanical properties (using low percentages of polystyrene), i.e., a modified polyphenylene oxide, or to prepare compositions which are rich in polystyrene and show a better processability but less satisfactory mechanical properties.

Compositions which contain from 0.95 to 80% by weight of styrenic resin(s) are particularly preferred.

Polymeric blends having a mixture of overall favourable characteristics such as good mechanical properties, good processability, thermal stability and reasonable flame-resistance generally contain about equal parts by weight of polyphenylene oxide and styrenic resin(s). This is advantageous also from an economical point of view.

The excellent balance of properties of the above polymeric compositions makes it possible to use them in a wide range of fields, including applications in the medical and biological fields (sterilization), as components for electrical and electronic equipment (electrical properties), and cars (limited water absorption and shock-resistant properties) and in general as replacement for metallic parts (low water absorption, dimensional stability etc.).

The compositions of the present invention may also contain one or more of the auxiliary agents conventionally used in this field, such as plasticizers, primary and secondary antioxidants, detaching agents, lubricants, flame retardants, antistatic agents, dyes, pigments, mineral fillers, reinforcing agents such as glass fibers, microspheres etc.

The polyphenylene oxide used in the following examples was obtained by the oxidative condensation of 2,6-xylenol, using the process described by the applicant in IT-A-24024/83. The samples of homopolymer and its blends were characterized by measurements of:

- Intrinsic viscosity ($\eta$):
  This property was determined in a chloroform solution at 25° C using an Ubbelohde viscometer and is expressed in dl/g.
- Melt Flow Index (MFI):
  The determination of the melt flow index was carried out in a melt indexer with a load of 5 kg and a temperature range of 280-300° C according to ASTM D 1238.
-

Weight average molecular weight ($\overline{MW}$):

This measurement was carried out by gel permeation chromatography of polymer solutions in tetrahydrofuran (conc. 0.1%, temperature 25° C). In the case of polyphenylene oxide/polystyrene blends a U.V. detector at 280 nm was used specifically for polyphenylene oxide.

The polymeric compositions referred to in the following examples were prepared with polystyrene (Edistir® 1380) having a melt flow index of 2.5 g/10', measured at 200° C with a load of 5 kg, and with

shock-resistant polystyrene (Edistir® SRL 640) having a melt flow index of 2.9 g/10', determined under the above conditions.

The blends were prepared by extruding the components fed in the predetermined ratios with a single-screw extruder (screw diameter 20 mm; L/D = 20).

The temperature was 280 °C and the screw speed was 50 revs/min.

The following examples are to further illustrate the present invention without limiting it in any way.

EXAMPLE 1

50 parts of polyphenylene oxide ($\eta$ = 0.54 dl/g; $\overline{MW}$ = 43,800); 50 parts of polystyrene and 1 part of phenylpropynoic acid (phenylpropiolic acid) are mixed in a Brabender W50/E mixer at a temperature of 295 °C, in a closed chamber, and at a rotation speed of 100 rpm.

After 25 minutes of treatment, the material is discharged and analysed. As a comparison, another mixture of the same ingredients, but without phenylpropynoic acid, is treated in the same way. The results given in Table 1 below show that the presence of the additive considerably reduces the increase in the weight average molecular weight $\overline{MW}$ caused by the thermal treatment, resulting in a satisfactory fluidity of the molten polymeric mass.

TABLE 1

| | MFI at 280 °C-5kg | $\overline{MW}$ of the polyphenylene oxide | % gel in THF |
|---|---|---|---|
| with additive | 6.7 g/10 min | 66,100 | 1.3 |
| without additive | 4.0 g/10 min | 99,600 | 6.9 |

EXAMPLE 2

50 parts of the polyphenylene oxide employed in the preceding example, 50 parts of polystyrene, 1 part of phenylpropynoic acid, 0.2 parts of sterically hindered phenol and 0.4 parts of an ester of phosphorous acid are mixed at a temperature of 280 °C in a single-screw extruder with a screw speed of 50 rpm. The extruded material is cooled with water and cut into granules.

The operation is consecutively repeated several times to assess the termal stability of the material as a function of the number of treatments or, indirectly, of time.

The samples of material are characterized. The results given in Table 2 below show that the addition of phenylpropynoic acid makes the material more fluid and inhibits the radical processes which cause, probably by the cross-linking of the macromolecules, an increase in the weight average molecular weight. For comparative purposes, the operation is repeated without said acid.

TABLE 2

| Number of treatments in extruder | MFI 280 °C-5 kg (g/10 min) | | $\overline{MW}$ of the polyphenylene oxide | |
|---|---|---|---|---|
| | Sample | Comparison | Sample | Comparison |
| 1 | 6.7 | 4.4 | --- | --- |
| 3 | --- | 2.6 | --- | --- |
| 5 | 8.3 | 2.7 | 56,100 | 64,900 |

EXAMPLE 3

The experiment described in the preceding example is repeated without sterically hindered phenol and ester of phosphorous acid.

The results given in Table 3 below show the effectiveness of phenylpropynoic acid as thermal stabilizer even without the above additives, fully described in the known technique.

TABLE 3

| Number of treatments in extruder | MFI 280 ° C-5 kg (g/10 min) | | $\overline{MW}$ of the polyphenylene oxide | |
|---|---|---|---|---|
| | Sample | Comparison | Sample | Comparison |
| 1 | 5.5 | 3.4 | --- | --- |
| 3 | 6.3 | --- | --- | --- |
| 5 | 6.3 | 2.8 | 53,400 | 73,000 |

EXAMPLE 4

45 parts of polyphenylene oxide described in example 1, 55 parts of Edistir® SRL 640, 0.2 parts of sterically hindered phenol, 0.4 parts of an ester of phosphorous acid and 1.5 parts of phenylpropynoic acid are mixed in a single-screw extruder at a temperature of 280 ° C with a screw speed of 50 rpm. The material is cut into granules when it leaves the extruder and the granules are then dried. The thermal stability of the blend is assessed by measuring the melt flow index at 300 ° C with a load of 5 kg after leaving the material under the above conditions for varying residence times.

The effectiveness of phenylpropynoic acid as thermal stabilizer of the blend is clearly shown by the results given in Table 4.

TABLE 4

| MFI at 300 ° C-5 kg (g/10 min) | | | | |
|---|---|---|---|---|
| Residence time (minutes) | 0 | 10 | 20 | 30 |
| Sample | 17.5 | 18.3 | 19.2 | 18.9 |
| Comparison without additive | 7.9 | 8.7 | 9.5 | 10.4 |

EXAMPLE 5

The experiment described in the preceding example is repeated, adding 1.5 parts by weight of carbon black to the mixture. The results given in Table 5 show that the presence of the pigment does not change the effectiveness of the unsaturated thermal stabilizer.

TABLE 5

| MFI at 300 ° C-5 kg (g/10 min) | | | | |
|---|---|---|---|---|
| Residence time (minutes) | 0 | 10 | 20 | 30 |
| Sample | 15.3 | 15.9 | 15.8 | 15.3 |
| Comparison without additive | 6.1 | 6.25 | 6.7 | 7.3 |

EXAMPLE 6

45 parts of polyphenylene oxide ($\eta$ = 0.56 dl/g), 55 parts of Edistir® SRL 640, 1.5 parts of an ester of phosphorous acid, 1.5 parts of carbon black and 1.5 parts of phenylpropynoic acid are treated as described in example 2. The characterization of the material obtained in the subsequent extrusions is also carried out with the measurement of the viscosity in the molten state but only in the case of the sample obtained after the first extrusion.

The results given in Tables 6 and 7 further demonstrate the beneficial effect of phenylpropynoic acid.

TABLE 6

| Number of extrusions | MFI at 280 °C - 5 kg (g/10 min) | |
|---|---|---|
| | Sample | Comparison |
| 1 | 4.9 | 2.9 |
| 3 | 5.0 | 2.9 |
| 5 | 5.2 | 3.4 |
| 7 | 5.4 | 3.7 |

TABLE 7

| Flow rate ($sec^{-1}$) | Viscosity of the molten material at 280 °C (Pa.s) | |
|---|---|---|
| | Sample | Comparison |
| 48 | 965 | 1484 |
| 96 | 779 | 1187 |
| 192 | 631 | 872 |
| 480 | 408 | 497 |
| 960 | 267 | 323 |
| 1920 | 176 | 202 |

## Claims

**1.** Polymeric compositions based on at least one polyphenylene ether (PPE) obtained by oxidative coupling of one or more substituted phenols, either as such or in combination with at least one (co)-polymer of styrene, said compositions containing at least one compound of general formula (I):

R-C≡C-COOH (I)

wherein R represents $C_1$-$C_6$ alkyl or haloalkyl or aryl, haloaryl, alkylaryl or cycloalkyl containing from 5 to 7 carbon atoms in the ring.

**2.** Compositions according to claim 1, wherein the PPE has been obtained by oxidative coupling of one or more alkylphenols in the presence of a catalyst and is of general formula (II):

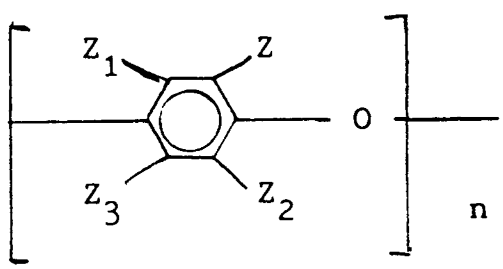

(II)

wherein Z, $Z_1$, $Z_2$ and $Z_3$ are independently selected from hydrogen, chlorine, bromine, fluorine, alkyl, substituted alkyl, cycloalkyl, substituted cycloalkyl, phenyl and substituted phenyl and n is an integer of at least 50.

**3.** Compositions according to any one of the preceding claims, wherein the PPE comprises poly(2,6-dimethyl-1,4-phenylene ether) and/or at least one copolymer of 2,6-dimethylphenol and one or more

alkylphenols corresponding to the repeating units of general formula (II), particularly a copolymer derived from 2,6-dimethylphenol and 2,3,6-trimethylphenol.

**4.** Compositions according to any one of the preceding claims, wherein the PPE has an intrinsic viscosity of from 0.3 to 0.7 dl/g in chloroform solution at 25 ° C.

**5.** Compositions according to any one of the preceding claims, wherein the concentration of the PPE ranges from 1 to 99% by weight, particularly from 20 to 80% by weight.

**6.** Compositions according to any one of the preceding claims, wherein the (co)polymer of styrene is a homopolymer, copolymer, interpolymer, random or block, linear, branched or graft (co)polymer containing units derived from styrene and particularly is selected from polystyrene (PS), high impact polystyrene (HIPS), polystyrene grafted onto any polymeric, plastic or thermoplastic substrate, ABS resins, SBR rubbers, linear or star-shaped copolymers based on polystyrene or grafted with polystyrene and copolymers or interpolymers of styrene and various monomers, e.g., styrene-maleic anhydride, styrene-maleimide, styrene-(meth)acrylic acid, styrene-(meth)acrylate, acrylonitrile-styrene-acrylate andmethacrylate-acrylonitrile-butadiene-styrene copolymers; and mixtures thereof.

**7.** Compositions according to any one of the preceding claims, wherein the concentration of the (co)-polymer(s) of styrene ranges from 0.95 to 80% by weight.

**8.** Compositions according to any one of the preceding claims, wherein the compound of formula (I) is 3-phenyl-propynoic acid.

**9.** Compositions according to any one of the preceding claims, wherein the compound(s) of formula (I) is (are) used in an amount of from 0.1 to 4 parts by weight per 100 parts by weight of PPE or its blends.

**10.** Moulded articles, obtainable from the compositions according to any one of claims 1 to 9.